Europäisches Patentamt

**European Patent Office**

Office européen des brevets

(11) Publication number : **0 473 261 A2**

(12) **EUROPEAN PATENT APPLICATION**

(21) Application number : **91305825.1**

(51) Int. Cl.$^5$ : **F16K 15/14**

(22) Date of filing : **27.06.91**

(30) Priority : **27.06.90 JP 166743/90**

(43) Date of publication of application :
**04.03.92 Bulletin 92/10**

(84) Designated Contracting States :
**DE FR GB**

(71) Applicant : **MITSUBISHI OIL CO., LTD**
**1-4, Toranomon 1-chome**
**Minato-ku Tokyo (JP)**

(72) Inventor : **Yano, Hisashi**
**1019-233 Aza Araisawa, Kuden-cho, Sakae-ku**
**Yokohama-shi, Kanagawa (JP)**
Inventor : **Yabumoto, Junsuke**
**48-8, Nakaechi**
**Atsugi-shi, Kanagawa (JP)**
Inventor : **Kitada, Akiharu**
**6, Kitaterao 6-chome Tsumuri-ku**
**Yokohama-shi Kanagawa (JP)**

(74) Representative : **Charlton, Peter John et al**
**Elkington and Fife, Prospect House, 8**
**Pembroke Road**
**Sevenoaks, Kent TN13 1XR (GB)**

(54) **Pressure regulating valve.**

(57) A pressure regulating valve arranged to operate upon increase of pressure in a fluid passage is disclosed. It comprises a valve hole having opposite ends, one of the ends facing the fluid passage, and a valve body for normally closing the valve hole at the other end thereof. The valve body has an arcuate configuration and is elastically deformable. When the pressure in the passage is increased due to an increase of flow resistance, the valve body is deformed by the increased pressure to open the valve hole which continues to open until the pressure lowers to a level where the elastic force in the valve body prevails over the pressure.

EP 0 473 261 A2

FIG.1

The present invention relates to a pressure regulating valve used in a fluid passage for regulating a fluid pressure therein. More specifically, the invention relates to a valve adapted to operate when the fluid pressure is increased due to an increase of resistance to flow in the passage, in order to ensure a continuous smooth flow of fluid and to prevent the passage from being destroyed by the increased fluid pressure. The fluid herein may be in the form of liquid or gas.

It is well known in the art to incorporate a pressure regulating valve into a fluid passage such as a conduit for the purpose of regulating a pressure of fluid flowing in the passage, and there have been developed a number of such valves having various structures. Typical examples of those valves include a relief valve using a spring and an electromagnetic valve which is operable in response to a signal from a sensor electrically detecting the fluid pressure.

When the known pressure regulating valves are to be installed to, for example, a joint portion between two pipes or a flat wall of casing etc., the installation can easily be done by means of welding or bolts. However, there have needs to install the valve on an arcuate surface without adversely affecting a normal flow of the fluid. For example, a dual pipe structure is used to define the fluid passage. The passage is normally defined between inner and outer pipes while the inside space of the inner pipe can be used to allow the fluid to escape thereinto, or vice versa, through a valve when a smooth flow in the passage is prevented and the fluid pressure is increased. The prior art valves are considered to be unsatisfactory for such an application from the viewpoints of easiness in the installation and influence on the flow, those valves provided in the normal passage inevitably increasing the flow resistance.

Accordingly, an object of the invention is to provide a pressure regulating valve which may easily be installed on an arcuate surface and which can operate without increasing a flow resistance.

Another object of the invention is to provide a pressure regulating valve which may suitably be incorporated in an oil filter.

According to the invention, a pressure regulating valve adapted to operate upon increase of pressure in a fluid passage comprises a valve hole having opposite ends, one of the ends facing the fluid passage, and a valve body for normally closing the valve hole at the other end thereof. The valve body has an arcuate configuration and is elastically deformable.

When the pressure in the passage is increased due to an increased fluid resistance, such a pressure causes the valve body to deform while opening the valve hole. The fluid can therefore flow out of the passage through the valve hole, resulting in a decrease of the pressure. The valve body recovers its normal configuration to close the hole immediately after the elastic force exerted in the valve body prevails over the pressure. The arrangement of the valve body, i.e. at the end of valve hole opposite to the passage, has no influence on the flow resistance in the passage. Further, the arcuate configuration of the valve body facilitates an installation thereof to an arcuate surface.

In an embodiment of the invention, the fluid passage is defined by inner and outer pipes, the valve hole is formed through the wall of inner pipe and the valve body is fitted on the surface of inner pipe. The fluid passage may be defined either between the inner and outer pipes, in which case the valve body is fitted on the inner surface of inner pipe, or within the inner pipe where the valve body is fitted on the outer surface of inner pipe. If desired, both of the spaces defined between the inner and outer pipes and within the inner pipe can be alternatively used as the fluid passage. In such a case, the valve hole is formed in plural at different axial positions through the wall of the inner pipe, and the valve body comprises first and second bodies fitted on the inner and outer surfaces, respectively, of the inner pipe.

In some embodiments of the invention, the valve body comprises a stationary secured main portion and at least one movable end portion. By changing a length of the end portion, a pressure at which the pressure regulating valve operates can be adjusted. Alternatively, the adjustment of pressure may be effected by changing elasticity of the valve body, which in turn can be made for example by changing material of which the valve body is formed or by varying thickness of the valve body.

Preferably, one of the valve hole and valve body includes sealing means for providing a liquid-tight seal of the valve hole by the valve body. This sealing means may comprise a hemispherical projection on the valve body adapted to fit in the valve hole.

In order to ensure a positioning of the valve body, a groove may be formed in the surface of the inner pipe in which the valve body is fitted.

other objects, features and advantages of the invention will be apparent from the following description of the preferred embodiments thereof when taken in conjunction with the accompanying drawings.

FIG. 1 is a schematic view illustrating a pressure regulating valve according to an embodiment of the invention;

FIG. 2 is a view similar to FIG. 1 but showing a pressure regulating valve according to another embodiment of the invention;

FIG. 3 is a sectional view showing an oil filter in which is incorporated a pressure regulating valve according to yet another embodiment of the invention;

FIG. 4 is also a sectional view showing another oil filter incorporating a pressure regulating valve according to still another embodiment of the invention; and

FIG. 5 is a cross sectional view taken along a line V-V in FIG. 4.

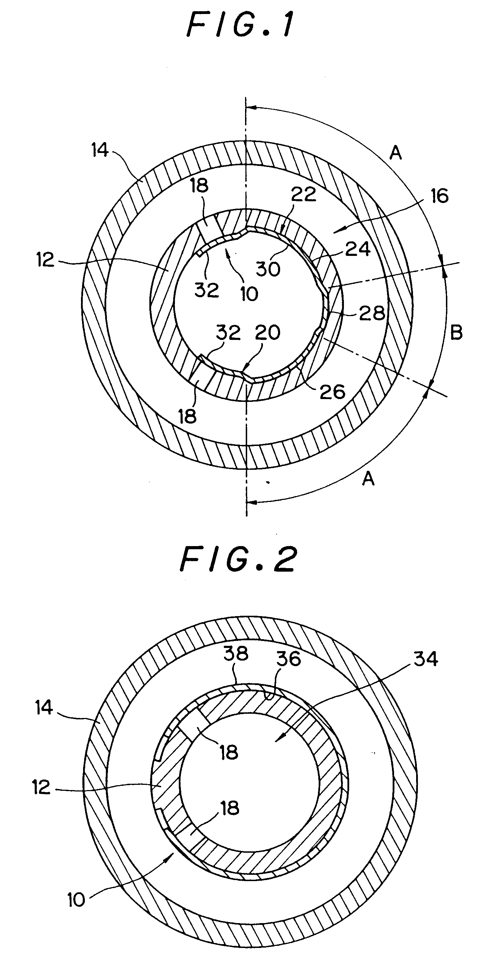

Referring first to FIG. 1 of the drawings, there is illustrated a pressure regulating valve 10 according to a first embodiment of the present invention. The valve 10 is shown to be incorporated in a dual pipe structure which comprises an inner pipe 12 and an outer pipe 14 both having a circular cross section and defining therebetween a passage 16 for fluid. A pair of valve holes 18 are formed through the wall of inner pipe 12 to communicate the passage 16 with an inside space of the inner pipe 12. These valve holes 18 are spaced apart from each other in circumferential direction by an angle less than 180° as seen in the left-hand side of FIG. 1. Fitted within the inner pipe 12 is a valve body 20 which has an arcuate cross section having an angular extent of more than 180° so that it fully covers the surface of inner pipe 12 in the right-hand side and extends beyond the valve holes 18 in the left-hand side. The valve body 20 is elastically deformable and formed of, for example, thin sheet metal or synthetic resin to have a width sufficient to close the valve holes 18. This valve body 20 and the holes 18 constitute the pressure regulating valve 10.

Formed on the inner surface of pipe 12 is a groove 22 which has an angular extent of about 180° covering the right-hand side, as shown by zones A and B. The groove 22 is divided into three segments 24, 26 and 28, the first two segments being in the zones A which are separated by the intervening zone B where the segment 28 extends. The zone B is positioned at circumferentially middle portion of the right-hand side of pipe 12, and the groove 22 has a depth at the segment 28 greater than a depth at segments 24 and 26. The valve body 20 includes a main portion 30 which is so shaped as to tightly fit in the groove 22, retaining the valve body 20 in position shown in FIG. 1 with the deeper segment 28 enhancing the retention. Extending from the main portion 30 are opposite end portions 32 each of arcuate configuration that are normally in press-contact with the inner surface of pipe 12 by their own elasticity. The valve holes 18 are thus normally closed by the end portions 32 of valve body 20.

The dual pipe structure is connected to various devices (not shown) using fluid or incorporated in a circulation system for fluid, and it is now assumed that the fluid is flowing in the passage 16 toward a certain device. When a pressure in the passage 16 is increased by the fluid due to a clogging in the device for example, and if the increased pressure exceeds a value which is determined by the elastic force of end portions 32 at the valve holes 18, the end portions 32 are deformed by the fluid passing through the holes 18. This deformation is effected in such a manner that the end portion 32 moves away from the inner surface of pipe 12 with the junction between the end portion 32 and main portion 30 acting like a pivot or fulcrum. Accordingly, the valve hole 18 opens to allow the fluid to flow into the space within the pipe 12 for bypassing the device or for other purposes. The valve holes 18 continue to open until the pressure in passage 16 is reduced to a level below the above value where the end portions 32 return to their normal position of FIG. 1 by the elasticity.

It is to be noted here that the pressure value at which the valve opens varies depending on the elastic force exerted in the valve body 20, which force in turn varies depending on a length of end portion 32 as measured from the junction with the main portion 30. For example, the pressure value is increased by shortening the end portion 32. Alternatively, the pressure value can be adjusted by changing inherent elasticity of the end portion 32, which change may be made through a selection of material of which the valve body 20 is formed or by varying a thickness of the end portion, for example.

In a second embodiment of the invention illustrated in FIG. 2, a passage 34 for fluid is defined within an inner pipe 12 and the circular space confined between the inner and outer pipes is used as, for example, a bypass passage, these arrangements being contrary to those in the first embodiment. A groove 36 is formed on the outer surface of pipe 12 to have a substantially uniform depth through its entire length. Tightly fitted in the groove 36 is an arcuate valve body 38 having a length and a width sufficient to close the valve holes 18, the valve body and holes constituting the pressure regulating valve 10. As is similar to the first embodiment, when a pressure in the passage 34 exceeds a value determined by the elastic force of valve body 38 at the holes 18, the fluid passing through the holes 18 deforms the end portions of valve body to move away from the outer surface of pipe 12. The valve holes 18 are thus opened to allow the fluid to flow into the circular space for bypassing. In this embodiment, the pressure value can be changed by varying an entire length of valve body 38.

In some applications of the dual pipe structure, the fluid passage can be changed from the circular space between the inner and outer pipes 12, 14 to the interior space of inner pipe 12, or vice versa. If such a change is required, the pressure regulating valves of the first and second embodiments may be combined together but arranged at different positions in the axial direction of pipe 12.

Further, the valve body 20 or 38 may be mounted on the inner pipe 12 through various means and, if desired, the groove 22 or 36 can be omitted. Examples of such alternatives include a use of bolt fastened to the inner pipe 12 through the valve body at a circumferential center thereof, an integral projection formed on the valve body along the longitudinal direction except the end portions and a corresponding depression on the inner pipe for accommodating the projection, and the like.

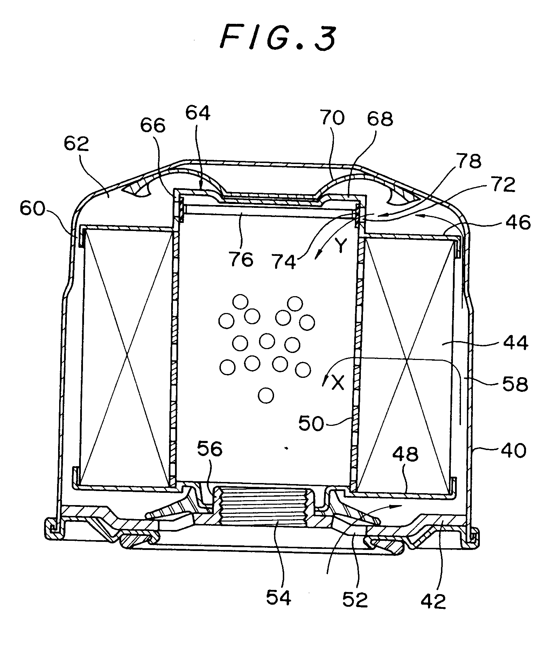

A pressure regulating valve according to a third embodiment of the invention is illustrated in FIG. 3 as incorporated in an oil filter that is installed in the lubricating system for engine. The oil filter per se is of the type well known in the art and comprises a cylindrical housing 40 having a lower open end which is closed by a base plate 42. Provided within the housing 40 is a filter or separator unit including an element 44 typically formed of a pleated paper which is supported between upper and lower end plates 46, 48 as well as by a perforated sleeve 50 attached to the inner periphery of element 44. An oil is adapted to enter into the housing 40 via an aperture 52 formed through the base plate 42 and to flow out via a central opening 54 defined by a vertical ring-shaped wall 56 of the base plate, which wall is internally threaded for engagement with a mount block (not shown) of the lubricating system.

The oil from the aperture 52 flows into a circular space 58 between the wall of housing 40 and the outer periphery of filter element 44. A narrow gap 60 is formed outside of the upper end plate 46 and defined by the wall of housing 40 to permit the oil to enter into an upper marginal portion 62 in the housing 40. The upper end plate 46 is provided with an upwardly extending central projection 64 of substantially cylindrical configuration having a side wall 66 and a bottom wall 68 which is urged by a leaf spring 70 downwardly to thereby secure the separator unit in position. A pair of oppositely arranged valve holes 72 are formed through the side wall 66 and normally closed by end portions of a valve body 76 fitted within the side wall 66. A flexible member 74 of rubber or the like is attached to the end portion in order to ensure a liquid-tight seal of the valve hole 72. As in the foregoing embodiments, the valve body 76 is of arcuate shape and fitted in a groove formed on the inner surface of side wall 66, though not specifically illustrated in FIG. 3. These valve holes 72 and valve body 76 together constitute a pressure regulating valve 78 as will be understood from the following description.

In the practical use, the oil flowing into the circular space 58 normally passes through the filter element 44 for filtration and enters within the sleeve 50 to be discharged outside of the housing 40 via the central opening 54 (arrow X). On the other hand, when the oil has a higher viscosity than usual due to a low temperature, or when the filter element 44 is clogged, a resistance to oil flow in the element 44 is increased while tending to prevent the oil from passing therethrough. This involves an increase of pressure in the circular space 58 as well as in the upper marginal portion 62 that is communicated with the space 58 via the gap 60. When the pressure exceeds a predetermined value, the end portions of valve body 76 are elastically deformed to move together with the flexible members 74 away from the inner surface of side wall 66, opening the valve holes 72. Consequently, the oil is allowed to flow into the space within the sleeve 50 via valve holes 72 for discharge through the central opening 54 (arrow Y). Thus, the pressure regulating valve 78 enables the oil to bypass the filter element 44 in case the latter prevents the smooth flow of the oil.

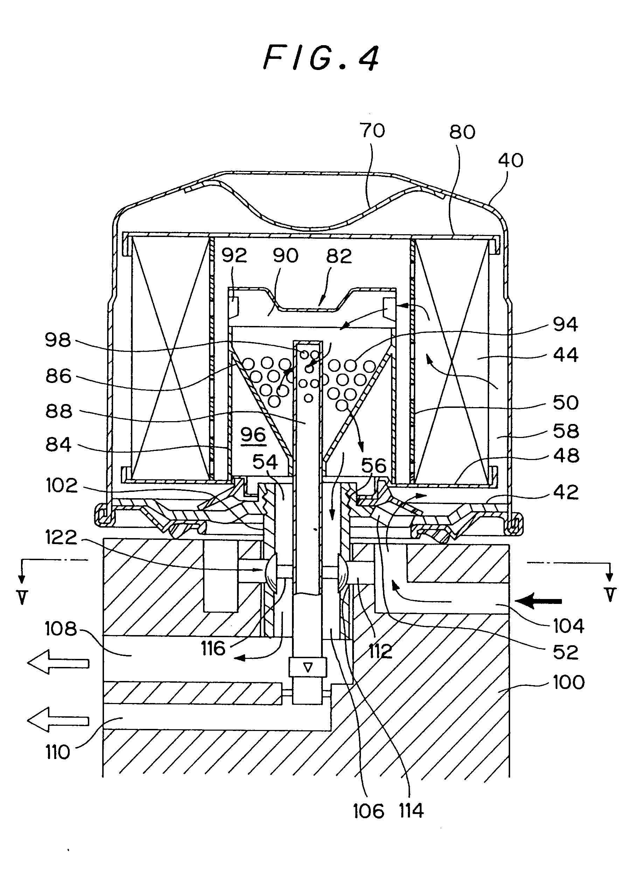

A fourth embodiment of the invention shown in FIG. 4 is similar to the third embodiment but different in that an oil filter to which the pressure regulating valve is applied has an additional filter or separator unit for removing gaseous contaminants from the oil, the oil filter of this type being disclosed in, for example, European Patent Publication No. 0 376 443 filed by the assignee herein. A first separator unit for removing solid contaminants is substantially the same as the separator unit in the third embodiment except an upper end plate 80 is flat, and same reference numerals are used to indicate the same parts.

The additional, second separator unit generally indicated by numeral 82 is disposed within the sleeve 50 along the axis of housing 40 and comprises a cylindrical casing 84 secured on the lower end plate 48, a funnel-shaped member or cyclone 86 attached to the casing 84 and a removal pipe 88 extending into the cyclone along the axis thereof. The cyclone 86 cooperates with the bottom of casing 84 to define a chamber 90 in which is created a vortical flow of the oil introduced therein from inlets 92 adapted to guide the oil flow in the chamber 90 with a vortical pattern. A plurality of pores 94 are formed in the wall of cyclone 86 to the chamber 90 with a space 96 which is defined between the cyclone 86 and casing 84 and communicates with the central opening 54. The removal pipe 88 has a closed top end and is provided at its upper portion with a number of small orifices 98 through which a gas-rich oil flows into the pipe 88.

The oil filter is attached to a mount block 100 by the threaded engagement between the vertical wall 56 of base plate 42 and a sleeve 102 fixed to the block 100. Formed in the block 100 are an inlet passage 104 communicated with the aperture 52, a central bore 106 in which the sleeve 102 extends, a first outlet passage 108 connected with the space 96 via the opening 54 and bore 106, and a second outlet passage 110 into which the removal pipe 88 is opened. A pair of bypass passages 112 are also formed in the block 100 and aligned with valve holes 114 in the sleeve 102 to connect the inlet passage 104 with the bore 106.

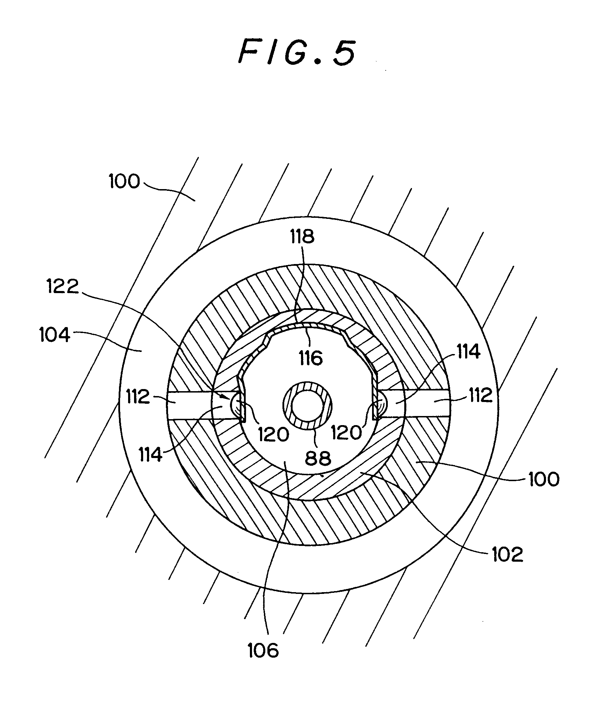

As best shown in FIG. 5, the valve holes 114 are normally closed by end portions of an arcuate valve body 116 that is fitted in a groove 118 formed on the inner surface of sleeve 102. A hemispherical projection 120 is secured to the end portion of valve body 116 for liquid-tight engagement with the valve hole 114. In the illustrated example the projection 120 is formed of flexible material such as a rubber, but it may be made by press working of the end portion itself. Also, the configuration of projection 120 may vary and an example of alternatives is a hemisphere-based shape having a flat top end. The valve holes 114 and valve body 116 together constitute a pressure regulating valve 122.

The oil flowing into the housing 40 is filtered as to the solid contaminants by the first separator unit in the same manner as in the third embodiment. The filtered oil is then introduced into the chamber 90 via the inlets 92 and flows downward in the chamber with the vortical pattern. Accordingly, a gas-rich oil is separated due to the difference in density and gathers around the removal pipe 88 for discharge through the orifices 98, pipe 88 and second outlet passage 110. The remaining oil which contains little gaseous contaminants flows into the space 96 via pores 94 and is fed to an engine (not shown) for lubrication through the bore 106 and first outlet pipe 108. This is the normal operation of the oil filter as shown.

On the other hand, if the viscosity of oil is higher than usual, or if either of the first and second separator units is clogged, a resistance against oil flow is increased in the housing 40. This results in an increase of pressure in the housing 40 and, consequently, in the inlet passage 104, such a pressure being applied to the valve body 116 via the bypass passage 112 and valve hole 114. Thus, when the pressure exceeds a predetermined value, the end portions of valve body 116 is elastically deformed and moves with the projection 120 away from the inner surface of sleeve 102. The valve holes 114 are therefore opened to permit the oil to directly flow from the inlet passage 104 to the first outlet passage 108 while bypassing the housing 40. The valve holes 114 continue to open until the pressure of oil is reduced to a level where the elastic force exerted in the valve body 116 prevails over the pressure in order for the end portions thereof to recover the normal configuration.

The arrangement of the pressure regulating valve 122 in the embodiment just described is particularly advantageous because the oil flow in the lubricating circuit or system is not interrupted even if a clogging occurs in the second separator unit 82. Such a clogging may occur when the filtration in the first separator unit is insufficient due to, for example, a partial breakage in the filter element 44.

## Claims

1. A pressure regulating valve adapted to operate upon increase of pressure in a fluid passage comprising a valve hole having opposite ends, one of said ends facing the fluid passage, and a valve body for normally closing said valve hole at the other end thereof, said valve body having an arcuate configuration and being elastically deformable.

2. A pressure regulating valve as claimed in claim 1, wherein the fluid passage is defined between an inner pipe and an outer pipe, and wherein said valve hole is formed through the wall of said inner pipe and said valve body is fitted on the inner surface of said inner pipe.

3. A pressure regulating valve as claimed in claim 1, wherein the fluid passage is defined within an inner pipe which is surrounded by a spaced-apart outer pipe to define an additional passage therebetween, and wherein said valve hole in formed through the wall of said inner pipe and said valve body is fitted on the outer surface of said inner pipe.

4. A pressure regulating valve as claimed in claim 1, wherein the fluid passage comprises an alternatively used first and second passages, the first passage being defined between an inner pipe and an outer pipe while the second passage is defined within said inner pipe, wherein said valve hole is formed in plural at different axial positions through the wall of said inner pipe, and wherein said valve body comprises first and second bodies fitted on the inner and outer surfaces, respectively, of said inner pipe.

5. A pressure regulating valve as claimed in claim 1, wherein said valve body comprises a stationarily secured main portion and at least one movable end portion, said valve hole being closed by said end portion, and wherein a pressure at which the pressure regulating valve operates is adjusted by changing a length of said end portion.

6. A pressure regulating valve as claimed in claim 1, wherein said valve body is substantially uniform along an entire length thereof, and wherein a pressure at which the pressure regulating valve operates is adjusted by changing the length of said valve body.

7. A pressure regulating valve as claimed in claim 1, wherein a pressure at which the pressure regulating valve operates is adjusted by changing an elasticity of said valve body.

8. A pressure regulating valve as claimed in claim 7, wherein the elasticity of said valve body is determined by a material of which said valve body is formed.

9. A pressure regulating valve as claimed in claim 7, wherein the elasticity of said valve body is determined by a thickness of said valve body.

10. A pressure regulating valve as claimed in claim 1, wherein one of said valve hole and said valve body includes sealing means for providing a liquid-tight seal of said valve hole by said valve body.

11. A pressure regulating valve as claimed in claim 10, wherein said sealing means comprises a hemispherical projection on said valve body, said projection being adapted to fit in said valve hole.

12. A pressure regulating valve as claimed in claim 10, wherein said sealing means comprises a projection of hemispherical-based shape having a flat top end, said projection being adapted to fit in said valve hole.

13. A pressure regulating valve as claimed in claim 1, wherein the fluid passage is defined by inner and outer pipes, and wherein said valve hole is formed through the wall of said inner pipe and said valve body is fitted on the surface of said inner pipe.

14. A pressure regulating valve as claimed in claim 13, further comprising a groove formed in the surface of said inner pipe, said valve body being fitted in said groove.

15. A pressure regulating valve as claimed in claim 14, wherein said groove has a shallow portion and a deep portion for enhancing the retention of said valve body.

16. A pressure regulating valve for use in a fluid passage defined by inner and outer pipes and adapted to open upon increase of pressure in the fluid passage, the pressure regulating valve comprising:

a valve hole formed through the wall of the inner pipe; and

a valve body having an arcuate configuration and formed of elastically deformable material, said valve body being fitted on the surface of the inner pipe at a side opposite to the fluid passage to normally close said valve hole, and said valve body being deformed by an increased pressure in the fluid passage to open said valve hole.

17. A pressure regulating valve as claimed in claim 16, wherein the fluid passage is defined between the inner and outer pipes, and wherein said valve body is fitted on the inner surface of the inner pipe.

18. A pressure regulating valve as claimed in claim 16, wherein the fluid passage is defined within the inner pipe, and wherein said valve body is fitted on the outer surface of the inner pipe.

19. A pressure regulating valve as claimed in claim 16, further comprising a groove formed on the surface of the inner pipe opposite to the fluid passage, and wherein at least a portion of said valve body is fitted in said groove.

20. A pressure regulating valve as claimed in claim 19, wherein said groove has an arcuate configuration having an angular extent less than the angular extent of said valve body.

21. A pressure regulating valve as claimed in claim 20, wherein said valve body comprises a main portion stationarily held in said groove and a pair of opposite end portions extending beyond said groove for closing said valve hole, said end portions being movable with a junction between said main portion and said end portions acting as a fulcrum.

22. A pressure regulating valve as claimed in claim 21, wherein a pressure at which said valve hole is opened is adjusted by changing a length of said end portion.

23. A pressure regulating valve as claimed in claim 16, wherein said valve body is substantially uniform along an entire length thereof, and wherein a pressure at which the pressure regulating valve operates is adjusted by changing the length of said valve body.

24. A pressure regulating valve as claimed in claim 16, wherein a pressure at which the pressure regulating valve operates is adjusted by changing an elasticity of said valve body.

25. A pressure regulating valve for use in an oil filter and adapted to open for providing a bypass passage for an oil flow, the oil filter including a housing and a cylindrical filter unit having defined therein a hollow space connected to a discharge opening of the housing, the pressure regulating valve comprising:

a central projection formed on the upper end of the filter unit and having a ring-shaped side wall and a bottom wall;

a valve hole formed through said side wall of said central projection and communicating with the hollow space; and

an arcuate valve body fitted on the inner surface of said side wall to normally close said valve hole, said valve body being formed of elastically deformable material so that an increased pressure of the oil flow deforms said valve body to open said valve hole.

26. A pressure regulating valve as claimed in claim 25, further comprising a groove formed on the inner surface of said side wall, and wherein said valve body is fitted in said groove.

27. A pressure regulating valve as claimed in claim 25, further comprising sealing means on said valve body adapted to press-contact with the inner surface of said side wall for providing a liquid-tight seal of said valve hole.

28. A pressure regulating valve as claimed in claim 27, wherein said sealing means comprises a projection attached to the end portion of said valve body and formed of flexible material.

29. A pressure regulating valve for use in an oil filter and adapted to open for providing a bypass passage for an oil flow, the oil filter including a housing, a cylindrical first separator unit for removing solid contaminants, a second separator unit for removing gaseous contaminants and disposed within the first separator unit, a mount block to which the housing is attached, an inlet passage formed in the mount block for supplying the oil into the housing and an outlet passage in the mount block for discharging an filtered oil from the housing, the pressure regulating valve comprises:

    a communicating passage formed in the mount block to extend between the inlet and outlet passages;

    a valve hole defined by the end of said communicating passage facing the outlet passage; and

    an arcuate valve body fitted on the surface defining the outlet passage to normally close said valve hole, said valve body being formed of elastically deformable material so that an increased pressure of the oil flow deforms said valve body to open said valve hole.

30. A pressure regulating valve as claimed in claim 29, further comprising a groove formed on the inner surface of said side wall, and wherein said valve body is fitted in said groove.

31. A pressure regulating valve as claimed in claim 29, further comprising sealing means on said valve body adapted to press-contact with the inner surface of said side wall for providing a liquid-tight seal of said valve hole.

32. A pressure regulating valve as claimed in claim 31, wherein said sealing means comprises a projection attached to the end portion of said valve body and formed of flexible material.

# FIG.1

# FIG.2

# FIG.3

# FIG.4

# FIG.5